# EUROPEAN PATENT APPLICATION

(11) **EP 3 597 347 A1**
(43) Date of publication of application: **22.01.2020**
(21) Application number: 17900901.4
(22) Date of filing: 21.11.2017
(51) Int. Cl.: B23K 9/10, B23K 9/16, B23K 9/167, B23K 9/173

(54) **HYBRID WELDING APPARATUS**

(30) Priority: 14.03.2017 JP 2017048078
(71) Applicant: Panasonic Intellectual Property Management Co., Ltd., Osaka-shi, Osaka 540-6207 (JP)
(72) Inventor: TANAKA, Haruki, Osaka-shi, Osaka 540-6207 (JP); KITA, Kazuo, Osaka-shi, Osaka 540-6207 (JP); OKAMOTO, Masahiro, Osaka-shi, Osaka 540-6207 (JP); MORITA, Kunitoshi, Osaka-shi, Osaka 540-6207 (JP)
(74) Representative: Vigand, Philippe
(86) International application number: PCT/JP2017/041748
(87) International publication number: WO 2018/168084

(57) **Abstract**

A hybrid welding apparatus selectively switches between MAG welding and TIG welding. The apparatus includes a control device (1), which includes a welding output unit (10) for outputting a welding voltage and a welding current. When MAG welding is selected, the positive terminal of the welding output unit (10) is connected to a MAG welding torch (2), and the negative terminal is connected to a welding base material (4). Meanwhile, when TIG welding is selected, the positive terminal of the welding output unit (10) is connected to the welding base material, and the negative terminal is connected to a TIG welding torch (3).

## Description

### TECHNICAL FIELD

The present disclosure relates to a hybrid welding apparatus for selectively switching between metal active gas (MAG) welding and tungsten inert gas (TIG) welding.

### BACKGROUND ART

In well-known hybrid welding apparatuses capable of switching between MAG welding and TIG welding, the MAG welding torch and the TIG welding torch are mounted on the same base and are switched with each other by adjusting their positions (e.g., Patent Literature 1 or 2).

### Citation List

### Patent Literature

PTL 1: Japanese Unexamined Patent Application Publication No. 5-8041
PTL 2: Japanese Unexamined Patent Application Publication No. 52-129649

### SUMMARY

The above-mentioned Patent Literatures disclose how the welding torches are switched with each other, but are silent about the structure of the power supply and controller of the hybrid welding apparatuses. In general, MAG welding and TIG welding are different in the method of controlling the welding output and in the structure of necessary components. Therefore, each hybrid welding apparatus has been composed of both a MAG welding apparatus and a TIG welding apparatus, causing the problems of installation space and cost.

To solve these problems, an object of the present disclosure is to provide a hybrid welding apparatus including a power supply and some other components that are shared between MAG welding and TIG welding.

The hybrid welding apparatus according to an aspect of the present disclosure is a hybrid welding apparatus for selectively switching between MAG welding and TIG welding. When MAG welding is selected, the positive terminal of the welding output unit for outputting a welding voltage and a welding current is connected to the MAG welding torch, and the negative terminal is connected to the welding base material. Meanwhile, when TIG welding is selected, the positive terminal of the welding output unit is connected to the welding base material and the negative terminal is connected to the TIG welding torch.

With this structure, the welding output unit can be shared between MAG welding and TIG welding, thereby greatly reducing the number of components, as compared with the case of using two separate welding apparatuses. This reduces the installation space as well as the total cost for the hybrid welding apparatus.

The hybrid welding apparatus according to the aspect of the present disclosure is composed of a single welding apparatus and can still perform different types of welding methods, thereby requiring less space and cost than the case of using separate welding apparatuses.

### BRIEF DESCRIPTION OF DRAWINGS

FIG.1 shows the configuration of a hybrid welding apparatus according to an exemplary embodiment of the present disclosure.
FIG.2 is a timing chart showing the operating state of the hybrid welding apparatus during MAG welding.
FIG.3 is a timing chart showing the operating state of the hybrid welding apparatus during TIG welding.

### DESCRIPTION OF EMBODIMENT

A hybrid welding apparatus according to an exemplary embodiment of the present disclosure will now be described with reference to the drawings.

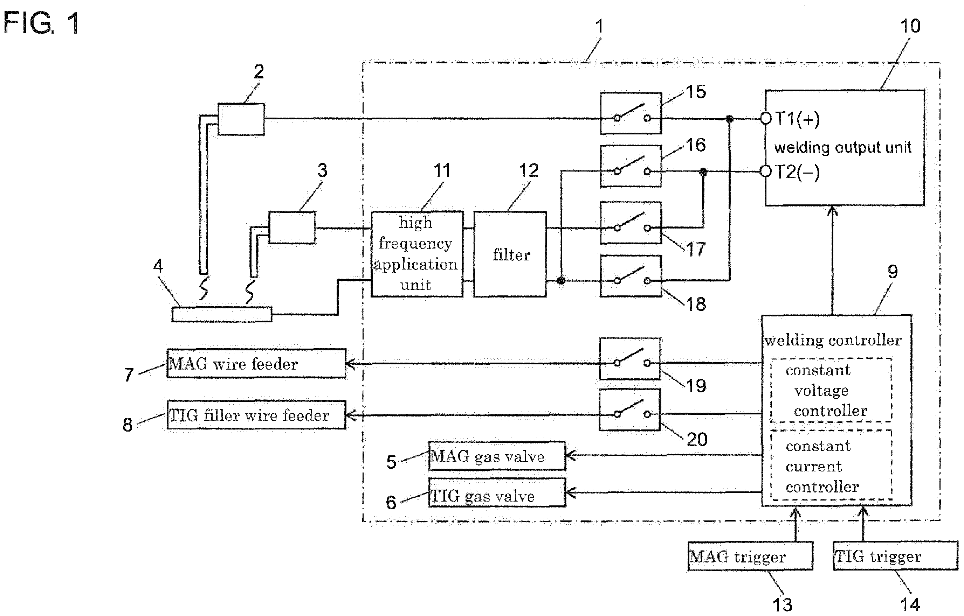

FIG.1 shows the schematic configuration of the hybrid welding apparatus according to the exemplary embodiment of the present disclosure. The apparatus includes control device 1, which includes the following components: MAG welding torch 2, TIG welding torch 3, MAG gas valve 5, TIG gas valve 6, welding controller 9, welding output unit 10, high frequency application unit 11, filter 12, MAG trigger 13, TIG trigger 14, welding output switch contacts 15 to 18, and control signal switch contacts 19 and 20 for the feeders.

MAG welding torch 2 is used for MAG welding, and TIG welding torch 3 is used for TIG welding.

MAG gas valve 5 turns on and off the supply of shielding gas to MAG welding torch 2 during MAG welding. TIG gas valve 6 turns on and off the supply of shielding gas to TIG welding torch 3 during TIG welding.

Welding controller 9 controls the following components: MAG gas valve 5, TIG gas valve 6, MAG wire feeder 7, TIG filler wire feeder 8, welding output unit 10, high frequency application unit 11, welding output switch contacts 15 to 18, and control signal switch contacts 19 and 20 for the feeders.

MAG wire feeder 7 feeds a welding wire for MAG welding. TIG filler wire feeder 8 feeds a filler wire for TIG welding.

Welding controller 9 includes a welding output control means for welding output unit 10. The welding output control means is composed of a constant voltage control means for MAG welding (the constant voltage controller shown in FIG.1) and a constant current control means for TIG welding (the constant current controller shown in FIG.1).

Welding output unit 10 outputs a desired welding voltage and a desired welding current according to the control signal from welding controller 9. Unit 10 has a positive welding output terminal T1 and a negative welding output terminal T2.

When TIG welding is performed using TIG welding torch 3, high frequency application unit 11 applies, at the start of arc welding, a high-frequency high voltage between welding base material 4 and a tungsten electrode (not shown), which is attached to the tip of TIG welding torch 3. The voltage application causes dielectric breakdown, thereby accelerating the start of arcing. High frequency application unit 11 is connected between TIG welding torch 3 and welding output unit 10.

Filter 12 is a low-pass filter composed of a capacitor and other components. Filter 12 protects welding output unit 10, switch contacts 15 to 20 from the high-frequency high voltage generated by high frequency application unit 11.

MAG trigger 13, which is, for example, a manual switch or a remote control, has the function of giving a MAG command to welding controller 9 at a given timing. TIG trigger 14, which is also a manual switch or a remote control, has the function of giving a TIG command to welding controller 9 at a given timing.

When MAG welding is performed using MAG welding torch 2, welding output switch contacts 15 and 16 are closed, so that the welding output of welding output unit 10 is supplied to MAG welding torch 2. In this case, MAG welding torch 2 is connected to the positive welding output terminal T1 of welding output unit 10, whereas welding base material 4 is connected to the negative welding output terminal T2 of welding output unit 10.

When TIG welding is performed using TIG welding torch 3, welding output switch contacts 17 and 18 are closed, so that the welding output of welding output unit 10 is supplied to TIG welding torch 3. In this case, TIG welding torch 3 is connected to the negative welding output terminal T2 of welding output unit 10, whereas welding base material 4 is connected to the positive welding output terminal T1 of welding output unit 10.

Thus, the polarity of the welding output of welding output unit 10 connected to the torches differs between during MAG welding and during TIG welding. This enables the hybrid welding apparatus to perform different types of welding methods with welding outputs of different polarities, such as MAG welding and TIG welding, by using the same welding output unit 10.

When MAG welding is performed using MAG welding torch 2, control signal switch contact 19 is closed, so that the control signal of welding controller 9 is supplied to a serve amplifier for driving the MAG wire feeder (not shown). Similarly, when TIG welding is performed using TIG welding torch 3, control signal switch contact 20 is closed, so that the control signal of welding controller 9 is supplied to a serve amplifier for driving the TIG wire feeder (not shown).

With this structure, the hybrid welding apparatus can choose either between MAG welding and TIG welding by allowing welding controller 9 to open or close switch contacts 15 through 20 and to switch between the constant voltage controller and the constant current controller as the welding output control means.

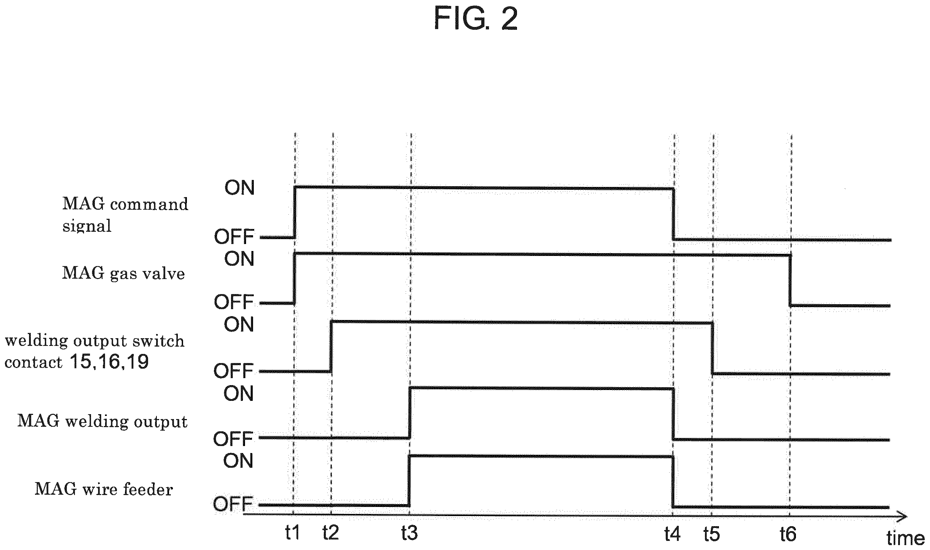

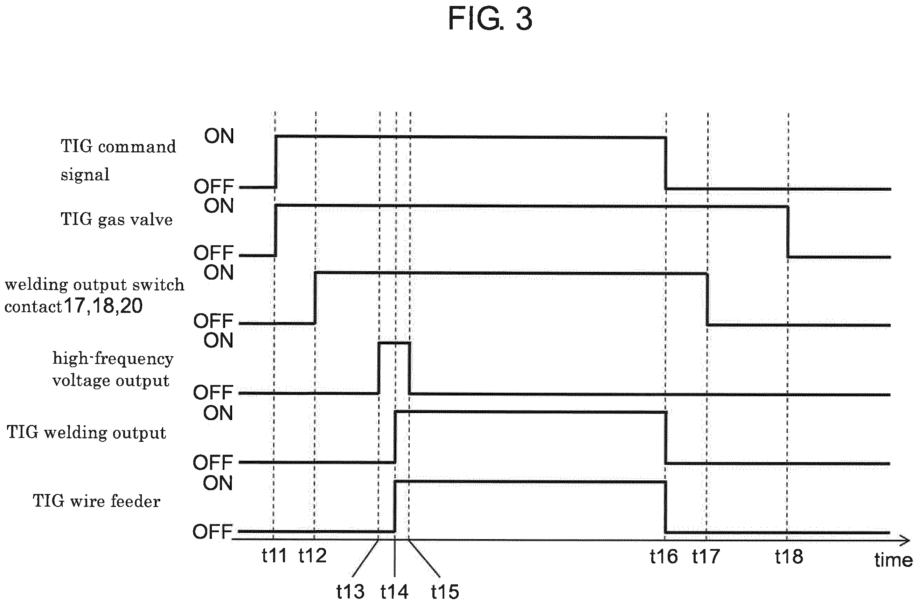

The operation of the hybrid welding apparatus according to the present exemplary embodiment will now be described with reference to FIGS.2 and 3.

FIG.2 is a timing chart showing the operating state during MAG welding. In the timing chart, the horizontal axis represents time. The chart indicates, from top to bottom, the on-off state of the following: MAG command signal; MAG gas valve 5; switch contacts 15, 16 and 19; MAG welding output; and MAG wire feeder 7.

The sequence of MAG welding will be described as follows. At a given time t1, MAG trigger 13 turns on a MAG command signal to be given to welding controller 9. In response, welding controller 9 supplies power to MAG gas valve 5, which is then turned on. Also at the time t1, welding controller 9 outputs a command to turn on switch contacts 15, 16 and 19. After the completion of their reaction time, switch contacts 15, 16 and 19 are turned on at a time t2.

From the time t1 to a time t3, the welding output is not provided and the gas alone is provided. This period is referred to as a preflow period during which switch contacts 15, 16 and 19 are closed, and welding controller 9 chooses, as the welding output control means, the constant voltage control means for MAG welding. This is how MAG welding is ready to be started. Switch contacts 15, 16 and 19 are closed within the preflow period (from the time t1 to the time t3) to make the MAG welding output available, so that welding can be started after substantially the same processing time as required in the case of the conventional MAG welding apparatuses.

At the time t3, the control signal of welding controller 9 makes welding output unit 10 turn on the MAG welding output. The control signal of welding controller 9 also activates the serve amplifier for driving the MAG wire feeder, thereby turning on MAG wire feeder 7. These conditions are kept, so that MAG welding is performed until a given time t4.

At the time t4, MAG trigger 13 turns off the MAG command signal to be given to welding controller 9. In response, the control signal of welding controller 9 stops the welding output of welding output unit 10, thereby turning off the MAG welding output. The control signal of welding controller 9 also stops the serve amplifier for driving the MAG wire feeder, thereby turning off MAG wire feeder 7.

At the time t4, welding controller 9 outputs a command to turn off switch contacts 15, 16 and 19. After the completion of their reaction time, switch contacts 15, 16 and 19 are turned off at a time t5.

From the time t4 to a time t6, the welding output is not provided and the gas alone is provided. This period is referred to as an afterflow period during which switch contacts 15, 16 and 19 are opened. This is the termination of MAG welding. Switch contacts 15, 16 and 19 are opened within the afterflow period (from the time t4 to the time t6) to terminate MAG welding, so that welding can be terminated after substantially the same processing time as required in the case of the conventional MAG welding apparatuses.

Next, the sequence of TIG welding will be described as follows with reference to FIG.3. FIG.3 is a timing chart showing the operating state during TIG welding. In the timing chart, the horizontal axis represents time. The chart indicates, from top to bottom, the on-off state of the following: TIG command signal; TIG gas valve 6; switch contacts 17, 18 and 20; high-frequency voltage output of high frequency application unit 11; TIG welding output; and TIG filler wire feeder 8.

At a given time t11, TIG trigger 14 turns on a TIG command signal to be given to welding controller 9. In response, welding controller 9 supplies power to TIG gas valve 6, which is then turned on. Also at the time t11, welding controller 9 outputs a command to turn on switch contacts 17, 18 and 20. After the completion of their reaction time, switch contacts 17, 18 and 20 are turned on at a time t12.

In the same manner as MAG welding, during the preflow period from the time t11 to a time t13, switch contacts 17, 18, and 20 are closed and welding controller 9 chooses, as the welding output control means, the constant current controller for TIG welding. This is how TIG welding is ready to be started. Switch contacts 17, 18, and 20 are closed within the preflow period (from the time t11 to the time t13) to make the TIG welding output available, so that welding can be started after substantially the same processing time as required in the case of the conventional TIG welding apparatuses.

At the time t13, the control signal of welding controller 9 activates high frequency application unit 11, thereby turning on the high-frequency voltage output. Later, at a time t14, the control signal of welding controller 9 makes welding output unit 10 start the welding output, thereby turning on the TIG welding output. The control signal of welding controller 9 also activates the serve amplifier for driving the TIG wire feeder, thereby turning on TIG filler wire feeder 8. At a time t15, the control signal of welding controller 9 stops high frequency application unit 11, thereby turning off the high-frequency voltage output. These conditions are kept, so that TIG welding is performed until a given time t16.

At a given time t16, TIG trigger 14 turns off the TIG command signal to be given to welding controller 9. In response, the control signal of welding controller 9 stops the welding output of welding output unit 10, thereby turning off the TIG welding output. The control signal of welding controller 9 also stops the serve amplifier for driving the TIG wire feeder, thereby turning off MAG wire feeder 7.

Also at the time t16, welding controller 9 outputs a command to turn off switch contacts 17, 18, and 20. After the completion of their reaction time, switch contacts 17, 18, and 20 are turned off at a time t17.

During the afterflow period from the time t16 to the time t18, switch contacts 17, 18, and 20 are opened. This is the termination of TIG welding. Switch contacts 17, 18, and 20 are opened within the afterflow period (from the time t16 to a time t18) to terminate TIG welding, so that welding can be terminated after substantially the same processing time as required in the case of the conventional TIG welding apparatuses.

Thus, the hybrid welding apparatus according to the present exemplary embodiment is composed of a single welding apparatus and can still perform different types of welding methods such as MAG welding and TIG welding. In this welding apparatus, the welding output unit can be shared between MAG welding and TIG welding, thereby greatly reducing the number of components, as compared with the case of using two separate welding apparatuses. Hence, this reduces the installation space as well as the total cost for the hybrid welding apparatus.

### INDUSTRIAL APPLICABILITY

As described above, the hybrid welding apparatus according to the present invention is composed of a single welding apparatus and is still capable of performing different types of welding methods. This apparatus is useful when different types of welding methods are desired to be performed.

### REFERENCE MARKS IN THE DRAWINGS

- 1: control device
- 2: MAG welding torch
- 3: TIG welding torch
- 4: welding base material
- 5: MAG gas valve
- 6: TIG gas valve
- 7: MAG wire feeder
- 8: TIG filler wire feeder
- 9: welding controller
- 10: welding output unit
- 11: high frequency application unit
- 12: filter
- 15, 16, 17, 18: welding output switch contact
- 19, 20: control signal switch contacts for the feeders

## Claims

1. A hybrid welding apparatus for selectively switching between metal active gas (MAG) welding and tungsten inert gas (TIG) welding, the hybrid welding apparatus comprising a control device, the control device comprising:
a MAG welding torch;
a TIG welding torch; and
a welding output unit having a positive terminal and a negative terminal, the welding output unit being configured to output a welding voltage and a welding current,
wherein
when MAG welding is selected, the positive terminal is connected to the MAG welding torch, and the negative terminal is connected to a welding base material, and
when TIG welding is selected, the positive terminal is connected to the welding base material, and the negative terminal is connected to the TIG welding torch.

2. The hybrid welding apparatus according to claim 1, further comprising a high frequency application unit connected between the welding output unit and the TIG welding torch.

3. The hybrid welding apparatus according to claim 1 or 2 selectively switching between MAG welding and TIG welding during one of a preflow period and an afterflow period,
wherein during the preflow period and the afterflow period, the hybrid welding apparatus refrains from providing a welding output and provides welding gas alone.
